(19) Europäisches Patentamt
European Patent Office
Office européen des brevets

(11) Numéro de publication: **0 273 799 A2**

(12) # DEMANDE DE BREVET EUROPEEN

(21) Numéro de dépôt: **87402694.1**

(22) Date de dépôt: **30.11.87**

(51) Int. Cl.[4]: **A 01 N 47/22**
A 01 N 25/02, A 01 N 25/30

(30) Priorité: **12.12.86 IT 2267186**

(43) Date de publication de la demande:
**06.07.88 Bulletin 88/27**

(84) Etats contractants désignés: **DE ES FR GB**

(71) Demandeur: **SOCIETE GERONAZZO S.p.A.**
**Via Milano 78/80**
**I-Ospiate DI Bollate, Milano (IT)**

(72) Inventeur: **Mascheroni, Anghelito**
**Via de raude 16**
**RHO (IT)**

(74) Mandataire: **Fabre, Madeleine-France et al**
**RHONE-POULENC INTERSERVICES Service Brevets Chimie 25, quai Paul Doumer**
**F-92408 Courbevoie Cédex (FR)**

(54) **Compositions herbicides concentrées émulsionnables à base de méta-biscarbamates.**

(57) Composition herbicide liquide concentrée émulsionnable à base de méta-biscarbamate, en particulier de Phenmedipham, d'un solvant organique, d'un agent "mouillant" non-ionique éventuel et d'un agent tensio-actif essentiellement non-ionique comprenant au moins un composé de formule

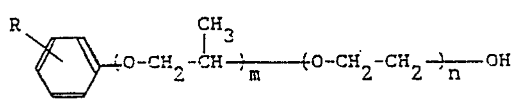
(I)

où R est un radical alkyle, m va de 0,5 à 40 et n de 2 à 60, le rapport n/m allant de 0,5 à 6, au moins 40 % en poids dudit agent tensio-actif essentiellement non-ionique étant constitué d'un composé de formule I dans laquelle m est supérieur ou égal à 7 et n supérieur ou égal à 9.

EP 0 273 799 A2

**Description**

COMPOSITIONS HERBICIDES CONCENTREES EMULSIONNABLES A BASE DE META-BISCARBAMATES

La présente invention a pour objet des compositions herbicides liquides concentrées émulsionnables à base de méta-biscarbamates en particulier à base de Phenmédipham, leur procédé de préparation et leur application sous forme d'émulsions à la lutte contre les plantes adventices.

L'activité herbicide des méta-biscarbamates est bien connue (brevet américain n° 3.692.820). Des concentrés liquides émulsionnables contenant ces méta-biscarbamates ont été décrits.

Un certain nombre de documents (brevets français publiés sous les n° 1.536.108 et n° 2.530.122 ; brevet américain n° 3.898.075 ; brevet européen n° 102.003 ; brevet belge n° 892.864) décrit l'emploi pour la préparation de tels concentrés à base de méta-biscarbamates de substances tensio-actives et/ou stabilisantes.

L'ensemble des exemples de réalisation décrits dans ces documents montre qu'il est couramment admis pour la préparation de concentrés émulsionnables à base de méta-biscarbamates, d'utiliser un émulsifiant non-ionique en mélange avec un émulsifiant anionique due type sels d'acides alkylbenzènesulfoniques, esters phosphoriques d'alkylphénols ou de styrylphénols polyéthoxylés... En effet, bien que l'emploi d'un émulsifiant non-ionique comme seul émulsifiant permette parfois de préparer des concentrés émulsionnables à base de méta-biscarbamates de stabilité répondant à la norme FAO (AGP : CP/90 spécifique du Phenmedipham - Food and Agriculture Organization of the United Nations), il a été constaté qu'une stabilité maximum desdits concentrés émulsionnables n'est obtenue que si un émulsifiant anionique est présent à côté dudit émulsifiant non-ionique.

La demanderesse a trouvé une classe de substances tensio-actives non-ioniques ne nécessitant pas, en présence d'un méta-biscarmate, l'adjonction d'une substance tensio-active anionique.

La présente invention a pour objet une composition herbicide liquide concentrée émulsionnable à base d'un méta-biscarbamate, d'un solvant organique, d'un agent "mouillant" non-ionique éventuel et d'un agent tensio-actif caractérisé en ce que ledit agent tensio-actif est essentiellement non-ionique et comprend au moins un alkylphénol présentant une séquence polyoxypropylène et une séquence polyoxyéthylène et répondant à la formule I :

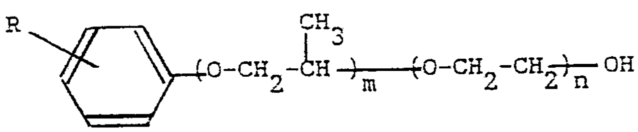

(I)

formule dans laquelle :

- R représente un radical alkyle linéaire ou ramifié en $C_5$ -$C_{18}$, de préférence en $C_8$ - $C_{12}$,
- m est un nombre entier ou décimal allant de 0,5 à 49, de préférence de 1 à 35,
- n est un nombre entier ou décimal allant de 1 à 60, de préférence de 2,5 à 45,

avec un rapport n/m allant de 0,5 à 6 et de préférence de 1 à 5, et en ce qu'au moins 40% en poids, de préférence au moins 60% en poids, dudit agent tensio-actif non-ionique est constitué par un alkylphénol polyoxypropyléne et polyoxyéthyléné de formule I dans laquelle m est supérieur ou égal à 7 environ et n est supérieur ou égal à 9 environ.

Les méta-biscarbamates entrant dans la composition herbicide de l'invention peuvent être représentés par la formule II suivante :

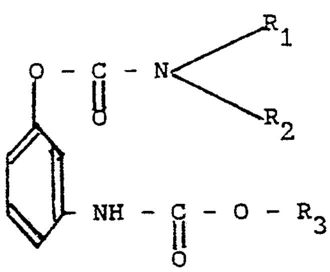

(II)

formule dans laquelle :

- $R_1$ représente un reste alkyle, cycloalkyle ou aryle éventuellement substitué par un halogène et/ou un groupement alkyle et/ou un groupement trifluorométhyle
- $R_2$ est de l'hydrogène ou un reste alkyle

- $R_3$ est un reste alkyle, alkényle ou alkynyle éventuellement substitué en omega par un halogène.

A titre d'exemple, on peut citer :
- le 3-(méthoxycarboxylamino)-phényl-N-méthyl-N-phenylcarbamate
- le 3-(éthoxycarbonylamino)-phényl-N-phénylcarbamate appelé Desmédipham
- le 3-(méthoxycarbonylamino)-phényl-N-(3 chloro-4 fluoro phényl) carbamate
- et tout particulièrement le 3-(méthoxycarbonylamino)-phényl-N-(3 méthylphényl)-carbamate appelé Phenmédipham.

Les solvants organiques pouvant être mis en oeuvre sont ceux habituellement utilisés dans ce type de formulation. On peut citer à titre d'exemple les hydrocarbures aromatiques, la cyclohéxanone, le méthylhéxahydronaphtalène, le tetrahydronaphtalène, le diméthylsulfoxyde, le diméthyl formamide, le phtalate de dibutyle... et en particulier l'isophorone.

En présence d'un méta-biscarbamate l'agent tensio-actif non-ionique de formule I présente à la fois un caractère émulsifiant et un caractère "mouillant" (pris dans le sens d'activateur biologique), chaque caractère étant plus ou moins marqué selon les valeurs respectives de m et n.

Ainsi les agents tensio-actifs de formule I présentant un nombre m de motifs oxypropylène supérieur ou égal à 7 environ et un nombre n de motifs oxyéthylène supérieur ou égal à 9 environ (appelés ci-après agents tensio-actifs de "masse moléculaire élevée") ont plutôt une activité émulsifiante.

Ceux présentant un nombre m de motifs oxypropylène inférieur ou égal à 3 environ et un nombre n de motifs oxyethylène inférieur ou égal à 12 environ (appelés ci-après agents tensio-actifs de "masse moléculaire faible") ont plutôt une activité mouillante.

On peut penser que l'activité d'un mélange d'un agent tensio-actif de "masse moléculaire élevée" et d'un agent tensio-actif de "masse moléculaire faible" est équivalente à celle d'un agent tensio-actif formule I présentant un nombre m et un nombre n correspondant respectivement à la moyenne des nombre m et à la moyenne des nombres n.

Selon un mode de réalisation préférentiel de l'invention l'agent tensio-actif de formule I est constitué :
- de 1 partie en poids,d'un agent tensio-actif de "masse moléculaire élevée" présentant un nombre m allant de 13 à 35 et un nombre n allant de 17 à 45
- et de 0,2 à 0,6 partie en poids d'un agent tensio-actif de "masse moléculaire faible" présentant un nombre m allant de 1 à 2 et un nombre n allant de 2, 5 à 10.

Une variante de ce mode de réalisation préférentiel de l'invention consiste à remplacer tout ou partie de l'agent tensio-actif de "masse moléculaire faible" par un agent "mouillant" non-ionique usuel du type alkylphénol oxyalkyléné, alcools oxo oxyalkylénés...

Selon l'invention les agents tensio-actifs de "masse moléculaire élevée" peuvent être mis en oeuvre à raison de 50 à 200 % en poids, de préférence de 75 à 100 % en poids, par rapport au poids de méta-biscarbamate

Les compositions herbicides faisant l'objet de l'invention peuvent être stabilisées si nécessaire à l'aide des agents de stabilisation connus dans ce type de formulation. On peut citer les acides organiques choisis parmi les acides moncarboxyliques aliphatiques éventuellement halogénés (formique, monochloracétique, propionique, citrique, tartrique...), hydroxycarboxyliques aliphatiques (glycolique...), aromatiques (benzoïque, phtalique...) éventuellement substitués (dichlorobenzoïque, nitrobenzoïque, dinitrobenzoïque, chloronitrobenzoïque, chlorodinitrobenzoïque, nitroisophtalique...), les acides sulfoniques (méthane sulfonique, benzène sulfonique, p-toluène sulfonique...).

Selon l'invention, une composition herbicide concentrée liquide particulièrement intéressante comprend les constituants suivants dont les quantitiés sont exprimées en parties en poids pour 100 parties en poids de ladite composition herbicide :
- de 8 à 18 parties, de préféreence de 10 à 16 parties de méta-biscarbamate, notamment de Phenmédipham
- de 4 à 36 parties d'agent tensio-actif de formule I de "masse moléculaire élevée", de préférence de 7,5 à 16 parties
- de 0,8 à 21,5 parties d'un agent "mouillant" non-ionique de préférence choisi parmi les agents tensio-actifs de formule I de "masse moléculaire faible", de préférence de 1,5 à 9,5 parties ; le rapport pondéral tensio-actif "de masse moléculaire" élevée"/agent "mouillant" non-ionique allant de préférence de 1/0,2 à 1/0,6
- de 0,01 à 3 parties d'acide organique stabilisant, de préférence de 0,1 à 2 parties
- et le complément à 100 parties en solvant organique.

Lesdites compositions herbicides selon l'invention peuvent éventuellement contenir d'autres ingrédients ou additifs usuels dans la formulation de produits agricoles, notamment des agents de pénétration, des inhibiteurs de corrosion, des adhésifs...

Les compositions herbicides selon l'invention sont préparées sous la forme de solutions concentrées émulsionnables.

Il suffit ensuite de les diluer par une quantité déterminée d'eau pour obtenir des émulsions prêtes à l'emploi.

Lesdites émulsions contiennent généralement de 1 à 10 g, et de préférence de 1 à 6g de matière active par litre ; elles sont appliquées généralement à raison de 120 à 1200g/ha de matière active.

Les exemples suivants sont donnés à titre indicatif et ne peuvent être considérés comme une limite du domaine et de l'esprit de l'invention.

EXEMPLE :

On dissout 16,6 parties en poids de phenmédipham à 96 % de pureté dans 63,2 parties en poids d'isophorone, puis on ajoute :

- 14 parties en poids de nonylphenol polyoxypropylène et polyoxyéthylène de formule I dans laquelle m est égal à 20 et n à 30, comme émulsifiant
- 6 parties en poids de nonylphénol polyoxypropyléné et polyoxyéthylèné de formule I dans laquelle m est égal à 1 et n à 5, comme mouillant
- et 0,2 partie en poids d'acide monochloracétique comme stabilisant.

Le mélange obtenu est agité jusqu'à homogénéisation. On obtient ainsi une composition herbicide concentrée liquide emulsionnable.

Ladite composition est testée selon la norme AGP : CP/90 de "FAO Specifications for plant protection products" (Food and Agriculture Organization of the United Nations - Rome, 1980).

Les deux mesure suivantes sont effectuées :

- stabilité de l'émulsion et réémulsification selon la méthode CIPAC MT 36.1 dans les eaux standardisées A (20 ppm de dureté), D (342 ppm de dureté) et C (500 ppm de dureté)
- stabilité au stockage à 0°C selon la méthode CIPAC MT 39.1 et à 54°C selon la méthode CIPAC MT 46.1.

Les résultats de ces mesures figurent au tableau I.

EXEMPLE 2

On répète l'opération décrite à l'exemple 1 en remplaçant les 6 parties du mouillant décrit par 6 parties d'isooctylphénol hexaoxy éthyléné. Les autres constituants sont indentiques à ceux de l'exemple 1

On constate que las composition herbicide obtenue présente des propriétés de stabilité de l'emulsion et de réémulsification (méthode CIPAC MT 36.1) très voisines de celles de las composition de l'exemple 1.

EXEMPLE 3

On répète l'opération décrite à l'exemple 1 en replaçant les 14 parties de l'émulsifiant biséquencé décrit par 14 parties de l'émulsifiant tetraséquencé de même masse moléculaire et de formule suivante :

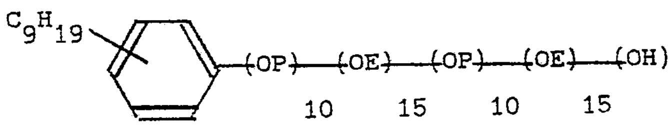

OP représentant un motif - O - $CH_2$ - CH -
CH$_3$

et OE un motif -O -$CH_2$ -$CH_2$-Les autres constituants sont identiques à ceux de l'exemple 1.

Les propriétés de stabilité de l'émulsion et de réémulsification (méthode CIPAC MT 36.1) de la composition herbicide obtenue figurent au tableau II.

Les valeurs obtenues montrent que, tout en étant acceptable selon la norme FAO ci-dessus citée, l'emulsifiant tetraséquencé testé est nettement moins performant que l'émulsifiant biséquencé revendiqué mis en oeuvre à l'exemple 1.

EXEMPLE

On répète l'opération décrite à l'exemple 3 en remplaçant les 14 parties d'émulsifiant tetraséquencé par :

- 2 parties de dodecylbenzène sulfonate de calcium
- 12 parties dudit émulsifiant tetraséquencé.

Les autres constituants sont identiques à ceux de l'exemple 3.

Les propriétés de stabilité de l'émulsion et de réémulsification (méthode CIPAC MT 36.1) figurent au tableau II.

Les valuers obtenues montrent que ce n'est qu'additionné de dodecylbenzène sulfonate de calcium que l'émulsifiant tetraséquencé présente des performances proches de celles de l'émulsifiant biséquencé mis en oeuvre à l'exemple 1.

EXEMPLE 5

On répète l'opération décrite à l'exemple 1 en remplaçant les 14 parties de l'émulsifiant décrit et les 6 parties du mouillant décrit par :

- 14 parties de nonylphénol polyoxypropyléné et polyoxyéthyléné de formule I dans laquelle m est égal à 15 et n à 40, comme émulsifiant
- et 6 parties de nonylphénolpolyoxypropyléné et polyoxyethyléne de formule I dans laquelle m est égal à 2 et n à 3,5, comme mouillant.

Les propriétés de stabilité de l'émulsion et de réémulsification (methode CIPAC MT 36.1) de la composition herbicide obtenue figurent au tableau II.

EXEMPLE 6

On répète l'opération décrite à l'exemple 1 en replaçant les 14 parties de l'émulsifiant décrit et les 6 parties du mouillant décrit par :
- 14 parties de nonylphénol polyoxypropyléné et polyoxyéthyléné de formule I dans laquelle m est égal à 30 et n égal à 20, comme émulsifiant
- et 6 parties de nonylphénolpolyoxypropyléné et polyoxyéthyléné de formule I dans laquelle m est égal à 1 et n à 9, comme mouillant.

Les propriétés de stabilité de l'émulsion et de réemulsification (méthode CIPAC MT 36.1) de la composition herbicide obtenue figurent au tableau II.

EXEMPLE 7

On répète l'opération de l'exemple 1 en mettant en oeuvre 12, 5 parties de l'émulsifiant décrit (au lieu de 14 parties ) et 7,5 parties du mouillant décrit (au lieu de 6 parties).

On constate que la composition herbicide obtenue présente des propriétés de stabilité de l'émulsion et de réémulsification (méthode CIPAC MT 36.1) très voisines de celles de la composition de l'exemple 1.

EXEMPLE 8

On répète l'opération de l'exemple 1 en mettant en oeuvre 16 parties de l'émulsifiant décrit (au lieu de 14 parties) et 4 parties du mouillant décrit (au lieu de 6 parties).

On constate que la composition herbicide obtenue présente des propriétés de stabilité de l'emulsion et de réémulsification (méthode CIPAC MT 36.1) très voisines de celles de la composition de l'exemple 1.

TABLEAU 1

Stabilité de l'émulsion et réemulsification [CIPAC MT 36.1]

| temps après dilution | Eau A crème en ml | Eau D crème en ml | Eau C crème en ml |
|---|---|---|---|
| 30 ' | 0 | 0 | 0 |
| 60 ' | 0 | 0 | 0 |
| 120 ' | 0 | 0 | 0 |
| 24 h | Réémulsification complète | | |
| 24,5 h | 0,6 | 0,3 | 0,2 |

Stabilité au stockage

- à 0°C pendant 7 jours [CIPAC MT 39.1]
  Aspect limpide du concentré

- à 54°C pendant 14 jours [CIPAC MT 46.1]

| temps après dilution | Eau A crème en ml | Eau D crème en ml | Eau C crème en ml |
|---|---|---|---|
| 30' | 0,1 | 0 | 0 |
| 60' | 0,2 | 0 | 0 |
| 120' | 0,4 | 0,1 | 0,1 |
| 24 h | Réémulsification complète | | |
| 24,5 h | 0,6 | 0,3 | 0,3 |

TABLEAU II

Stabilité de l'émulsion et réémulsification [CIPAC MT 36.1]

Temps après dilution

| Exemple | 30' crème en ml | | | 120' crème en ml | | | 24 h | 24,5 h crème en ml | | |
|---|---|---|---|---|---|---|---|---|---|---|
| | A | D | C | A | D | C | | A | D | C |
| 1 | 0 | 0 | 0 | 0 | 0 | 0 | RC | 0,6 | 0,3 | 0,3 |
| 3 | 0,2 | 0,2 | 0,2 | 1,6 | 1,2 | 1,1 | RC | 2,2 | 1,8 | 1,8 |
| 4 | 0 | 0 | 0 | 0,1 | 0,1 | 0,1 | RC | 0,6 | 0,4 | 0,4 |
| 5 | 0 | 0 | 0 | 0,4 | 0,3 | 0,3 | RC | 0,7 | 0,5 | 0,5 |
| 6 | 0 | 0 | 0 | 0,3 | 0,2 | 0,2 | RC | 0,5 | 0,4 | 0,4 |

"RC" signifie : réémulsification complète

## Revendications

1) Composition herbicide liquide concentrée émulsionnable à base d'un méta-biscarbamate, d'un solvant organique, d'un agent "mouillant" non-ionique éventuel et d'un agent tensio-actif, caractérisé en ce que ledit agent tensio-actif est essentiellement non-ionique et comprend au moins un alkylphénol présentant une séquence polyoxypropylène et une séquence polyoxyéthylène et répondant à la formule I :

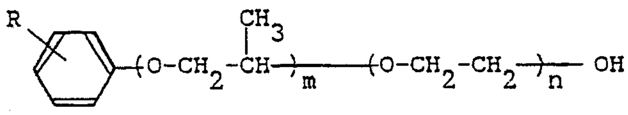

(I)

formule dans laquelle :
- R représente un radical alkyle linéaire ou ramifié en $C_5$ - $C_{18}$,
- m est un nombre entier ou décimal allant de 0,5 à 40
- n est un nombre entier ou décimal allant de 2 à 60

avec un rapport n/m allant de 0,5 à 6, et en ce que de 40 à 100 % en poids dudit agent tensio-actif non-ionique est constitué par un alkylphénol polyoxypropyléné et polyoxyéthyléné "de masse moléculaire élevée" et répondant à la formule I dans laquelle m est supérieur ou égal à 7 environ et n supérieur ou égal à 9 environ.

2) Composition herbicide selon la revendication 1 caractérisé en ce que dans la formule I :
- R représente un radical alkyle linéaire ou ramifié en $C_8$-$C_{12}$,
- m est un nombre entier ou décimal allant de 1 à 35,
- n est un nombre entier ou décimal allant de 2,5 à 45,

avec un rapport n/m allant de 1 à 5, et en ce que de 60 à 100 % en poids dudit agent tensio-actif non-ionique est constitué par un alkylphénol polyoxypropyléné et polyoxyéthyléné "de masse moléculaire élevée" et répondant à la formule I dans laquelle m va de 13 à 35 et n de 17 à 45.

3) Composition herbicide selon la revendication 1) caractérisé en ce que ledit tensio-actif de formule I est constitué :
- d'au moins 40 % en poids de l'alkylphénol polyoxypropyléné et polyoxyéthyléné "de masse moléculaire élevée" et répondant à la formule I dans laquelle m est supérieur ou égal à 7 environ et n supérieur ou égal à 9 environ.
- et d'un alkylphénol polyoxypropyléné et polyoxyéthyléné "de masse moléculaire faible" et répondant à la formule I dans laquelle m est inférieur à 3 environ et n inférieur ou égal à 12 environ.

4) Composition herbicide selon l'une quelconque des revendications précédentes caractérisée en ce que ledit tensio-actif de formule I est constitué :
- d'au moins 60 % en poids d'alkylphénol polyoxypropyléné et polyoxyéthyléné "de masse moléculaire élevée" et répondant à la formule I dans laquelle m va de 13 à 35 et n de 17 à 45
- et d'un alkylphénolpolyoxypropyléné et polyoxyéthyléné "de masse moléculaire faible" et répondant à la formule I dans laquelle m va de 1 à 2 et n de 2,5 à 10.

5) Composition herbicide selon la revendication 4 caractérisé en ce que ledit tensio-actif de formule I est constitué :
. de 1 partie en poids dudit alkylphénol polyoxypropyléné et polyoxyéthyléné " de masse moléculaire élevée"
. et de 0,2 à 0,6 partie en poids dudit alkylphénol polyoxypropyléné et polyoxyéthyléné "de masse moléculaire faible".

6) Composition herbicide selon l'une quelconque des revendications précédentes caractérisée en ce qu'elle contient de 50 à 200 % en poids de tensio-actif polyoxypropyléné et polyoxyéthyléné "de masse moléculaire élevée" par rapport au poids de méta biscarbamate.

7) Composition herbicide selon la revendicaion 6) caractérisée en ce qu'elle contient de 75 à 100 % en poids de tensio-actif polyoxypropyléné et polyxyéthyléné "de masse moléculaire élevée" par rapport au poids de méta-biscarbamate.

8) Composition herbicide selon l'une quelconque des revendications précédentes caractérisé en ce qu'elle comprend les constituants suivants dont les quantités sont exprimées en parties en poids pour 100 parties en poids de ladite composition herbicide:
- de 8 à 18 parties d'un méta-biscarbamate
- de 4 à 36 parties d'un agent tensio-actif polyoxypropyléné et polyoxyéthyléné "de masse moléculaire élevée" et répondant à la formule I dans laquelle m est supérieur ou égal à 7 environ et n supérieur ou égal 9 environ
- de 0,8 à 21,5 parties d'un agent "mouillant" non-ionique.
- de 0,01 à 3 parties d'acide organique stabilisant

- et le complément à 100 en solvant organique.

9) Composition herbicide selon la revendication 8 caractérisé en ce que l'agent "mouillant" non-ionique est un agent tensio-actif polyoxypropyléné et polyoxyéthyléné "de masse moléculaire faible" et répondant à la formule I dans laquelle m est inférieure à 3 environ et n inférieure ou égal à 12 environ.

10) Composition herbicide selon la revendication 8) caractérisée en ce qu'elle comprend les constituants suivants dont les quantités sont exprimées en parties en poids pour 100 parties en poids de ladite composition herbicide :

- de 10 à 16 parties de méta-biscarbamate
- de 7,5 à 16 parties d'un agent tensio-actif polyoxypropyléné et polyoxyéthyléné "de masse moléculaire élevée" et répondant à la formule I dans laquelle m va de 13 et n de 17 à 45
- de 1,5 à 9,5 parties d'un agent "mouillant" non-ionique, le rapport pondéral tensio-actif "de masse moléculaire élevée"/ "mouillant" allant de 1/0,2 à 1/0,6
- de 0,1 à 2 parties d'acide organique stabilisant
- et le complément à 100 en solvant organique.

11) Composition herbicide selon la revendication 10) caractérisée en ce que l'agent "mouillant" non-ionique est un agent tensio-actif polyoxypropyléné et polyoxyéthyléné "de masse moléculaire faible" et répondant à la formule I dans laquelle m va de 1 à 2 et n de 2,5 à 10,

12) Composition herbicide selon l'une quelconque des revendications précédentes caractérisée en ce que le méta-biscarbamate est :

- le 3-(méthoxycarbonylamino)-phényl-N-méthyl-N-phenylcarbamate
- le 3-(éthoxycarbonylamino)-phényl-N-phénylcarbamate appelé Desmédipham
- le 3-(méthoxycarbonylamino)-phényl-N-(3 chloro-4 fluoro phényl) carbamate
- ou le 3-(méthoxycarbonylamino)-phényl-N-(3 méthylphényl)-carbamate appelé Phenmédipham.

13) Composition herbicide selon l'une quelconque des revendications 8) à 12) caractérisée en ce que l'acide organique stabilisant est un acide monocarboxylique aliphatique éventuellement halogéné, hydroxycarboxylique aliphatique, aromatique ou sulfonique.

14) Composition herbicide selon l'une quelconque des revendications précédentes caractérisée en ce que le solvant organique est un hydrocarbure aromatique, la cyclohexanone, le méthyl hexahydro-naphtalène, le tetrahydronaphtalène, le diméthyl sulfoxyde, le diméthyl formamide, le phtalate de dibutyle ou l'isophorone.

15) Application sous forme d'émulsion, de la composition herbicide concentrée émulsonnable faisant l'objet de l'une quelconque des revendications précédentes à la lutte contre les plantes adventices.